# EUROPÄISCHE PATENTSCHRIFT

(11) **EP 1 182 767 B1**
(45) Veröffentlichungstag und Bekanntmachung des Hinweises auf die Patenterteilung: **19.11.2008**
(21) Anmeldenummer: 01118938.8
(22) Anmeldetag: 04.08.2001
(51) Int. Cl.: H02K 41/02, G01B 5/00, G01P 15/08

(54) **Linearführung**
Linear guide
Guidage linéaire

(30) Priorität: 16.08.2000 DE 10039916; 16.08.2000 DE 10039915
(43) Veröffentlichungstag der Anmeldung: 27.02.2002
(73) Patentinhaber: Schaeffler KG, 91074 Herzogenaurach (DE)
(72) Erfinder: Rudy, Dietmar, 67655 Kaiserslautern (DE)

(56) Entgegenhaltungen:
- EP-A- 0 886 145
- FR-A- 1 449 316
- PATENT ABSTRACTS OF JAPAN vol. 1995, no. 07, 31. August 1995 (1995-08-31) & JP 07 099765 A (MATSUSHITA ELECTRIC IND CO LTD), 11. April 1995 (1995-04-11)

## Beschreibung

### Gebiet der Erfindung

Die Erfindung betrifft eine Linearführung mit einer Führungsschiene, an welcher ein Lauf- oder Führungswagen längsverschieblich abgestützt ist, und mit einem die Längsverschiebung des Wagens bewirkenden Antrieb, welcher als Elektromotor mit einem an der Führungsschiene angeordneten Motorteil und einem an dem Wagen angeordneten Motorteil ausgebildet ist, sowie mit einem der Linearführung zugeordneten Längenmesssystem, welches einen dem Wagen oder der Führungsschiene benachbarten, parallel zu der Führungsschiene verlaufenden Messstreifen und einen relativ zu diesem verschieblichen Messkopf aufweist.

### Hintergrund der Erfindung

Eine Linearführung mit einem Längenmesssystem ist aus der Druckschrift WO 91/16594 bekannt. Bei der dort beschriebenen Vorrichtung ist ein Messstreifen in das Material eines länglichen Trägers eingesetzt, welcher in einer Rechtecknut einer Führungsschiene eingelegt und durch Verkleben befestigt ist.

An einem längs der Führungsschiene verfahrbaren Führungswagen ist ein Messkopf so angeordnet, dass er dem Messstreifen benachbart ist.

Die Druckschrift DE 198 42 384 A1 zeigt eine Linearführung der eingangs genannten Art, bei welcher die Führungsschiene und der Führungswagen in einem als Profilträger ausgebildeten Führungsgehäuse angeordnet sind. In diesem befindet sich auch der elektrische Antrieb mit dem Motorteil der Führungsschiene und dem Motorteil des Führungswagens, so dass es sich hier um einen Linearmotor handelt.

Aus der Druckschrift JP-A-07 099 765 ist eine Linearführung mit einer Führungsschiene bekannt, an welcher ein Führungswagen längsverschieblich abgestützt ist. Die Linearführung enthält einen Antrieb, der als Elektromotor mit einem an der Führungsschiene angeordneten elektrischen Anker als Motorteil und einem an dem Führungswagen angeordneten Permanentmagneten als Motorteil ausgebildet ist. An einem seitlichen Joch des Führungswagens sind ein Sensor und ein weiterer Permanentmagnet angeordnet. Dieser scheint einer Druckmessung oder Drucksteuerung zu dienen. Ein Längenmesssystem mit einem Messstreifen ist dieser Veröffentlichung nicht entnehmbar.

Die Druckschrift FR-A-1 449 316 zeigt in Figur 5 schematisch eine Vorrichtung zum Messen von Linearbewegungen. Dort ist an einem Magneten ein Sensor befestigt, an welchem eine Platte aus leitendem Material entlangbewegt werden kann. Dieser Veröffentlichung ist jedoch ein Längenmesssystem mit einem Messstreifen, der einem Führungswagen oder einer Führungsschiene benachbart ist, ebenfalls nicht entnehmbar.

Zur Regelung eines Linearmotors ist es bekannt, hochauflösende optische lineare Messsysteme zu verwenden Diese sind gegenüber Verschmutzungen empfindlich und stellen einen hohen Kostenfaktor dar. Als kostengünstige Linearmesssysteme sind auch magnetische oder induktive Linearmesssysteme bekannt. Diese lassen sich jedoch aufgrund physikalischer Gegebenheiten nicht so hoch auflösen wie beispielsweise optische Linearmaßstäbe. Insbesondere bei Linearmotoren muss das für die Regelung notwendige Geschwindigkeitssignal aus dem Linearmesssystem berechnet bzw. differenziert werden. Ist die Auflösung des Systems nicht hoch genug, so wird der gesamte Antrieb unruhig und damit unbrauchbar.

### Zusammenfassung der Erfindung

Der Erfindung liegt die Aufgabe zugrunde, eine verbesserte, gegenüber Verschmutzungen weniger empfindliche, kostengünstige Linearführung zu schaffen.

Diese Aufgabe wird erfindungsgemäß dadurch gelöst, dass dem Längenmesssystem ein mit einem Wirbelstromblech und einem dieses umgebenden, U-förmig ausgebildeten Erregerblock nach dem Ferraris-Prinzip arbeitender Beschleunigungssensor zugeordnet ist, wobei das Wirbelstromblech aus einem elektrisch leitenden, nicht magnetisierbaren Material wie z. B. Aluminium oder Kupfer besteht und der Erregerblock Permanentmagnete enthält und an dem Lauf- oder Führungswagen befestigt ist.

Auf diese Weise kann die Gewinnung eines Geschwindigkeitssignals über den Beschleunigungssensor realisiert werden. Ein Ferraris-Sensor misst nur die relative Beschleunigung zwischen zwei sich im Verhältnis zueinander bewegenden Bauteilen. Mit diesen Sensoren ist es möglich, einen Linearmotor mit einem niedrigauflösenden aber kostengünstigen magnetischen oder induktiven Linearmesssystem zu betreiben. Durch die Integration eines linearen Messsystems und eines Ferraris-Beschleunigungssensors in einer Profilschienenführung ergeben sich die Vorteile, dass kein zusätzlicher Bauraum erforderlich ist, dass eine Verringerung des Montageaufwandes und eine Kosteneinsparung erfolgen und dass eine Austauschbarkeit des Linearmesssystems möglich wird.

Die Funktion des Wirbelstromblechs kann von der Führungsschiene übernommen und diese kann aus einem amagnetischen härtbaren Wälzlagerstahl hergestellt sein. Als Wirbelstromblech kann auch ein Abdeckband aus einem nichtmagnetischen Metallwerkstoff verwendet werden, welches in einer Längsnut der Führungsschiene eingesetzt ist.

Der Erregerblock kann in einem separaten Gehäuse angeordnet sein, welches an dem Führungswagen befestigt ist. Dabei kann das Gehäuse für den Erregerblock an einer in die Verschieberichtung weisenden Stirnseite des Führungswagens angeordnet sein. Außerdem kann der Messkopf des Längenmesssystems in einem Gehäuse angeordnet sein, welches an dem Führungswagen ebenfalls an einer in die Verschieberichtung weisenden Stirnseite befestigt ist.

Nach dem erfindungsgemäßen Vorschlag kann die Gewinnung eines Geschwindigkeitssignals über den Beschleunigungssensor realisiert werden. Das Wirbelstromblech kann Teil eines einen Kabelkanal für eine Schleppkette bildenden, im Querschnitt U-förmigen Profilträgers sein. Damit ergibt sich der Vorteil, dass bei einer Linearführung mit einem Kabelkanal für eine den Beschleunigungssensor enthaltende Regelungsvorrichtung kein zusätzlicher Bauraum erforderlich ist und dass sich dadurch bei der Montage der Linearführung Kosten einsparen lassen.

Der Profilträger kann an einer Längsseite des Führungsgehäuses befestigt sein. Das Wirbelstromblech kann von dem im Querschnitt U-förmig ausgebildeten Erregerblock teilweise umgeben sein. Dieser kann von einer Mitnehmerleiste gehalten sein, welche an einer Längsseite des Laufwagens befestigt ist. Als elektrisch leitendes, nicht magnetisierbares Material für das Wirbelstromblech kommen beispielsweise Aluminium oder Kupfer infrage.

### Kurze Beschreibung der Zeichnung

Ausführungsbeispiele der Erfindung sind in der Zeichnung dargestellt und werden im Vergleich mit einem Linearmotor nach dem Stand der Technik im Folgenden näher beschrieben. Es zeigen:
- Figur 1: den prinzipiellen Aufbau eines Ferraris-Beschleunigungs-sensors;
- Figur 2: eine erfindungsgemäße Linearführung in einer Seitenansicht;
- Figur 3: einen Querschnitt durch die Linearführung gemäß Linie III - III der Figur 2;
- Figur 4: einen Querschnitt durch eine vorbekannte Linearführungseinheit mit zwei in einem Führungsgehäuse angeordneten Führungsschienen für zwei Führungswagen;
- Figur 5: eine weitere erfindungsgemäße Linearführung in einer Seitenansicht;
- Figur 6: eine stirnseitige Ansicht der Linearführung gemäß Pfeil VI der Figur 5 in vergrößerter Darstellung.

### Ausführliche Beschreibung der Zeichnung

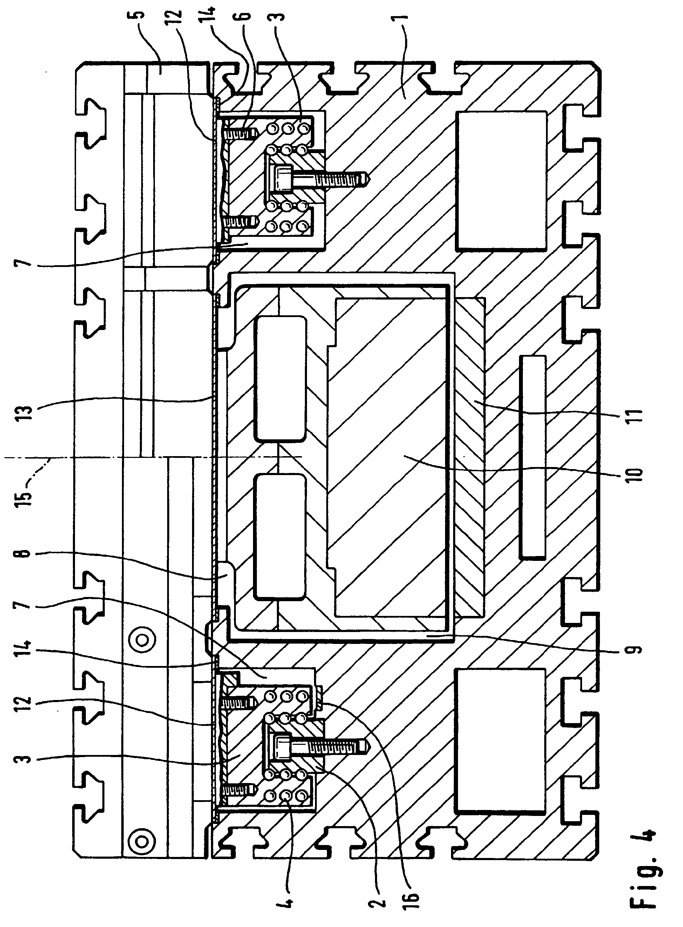

Eine in Figur 4 dargestellte vorbekannte Linearführung besteht aus einem im Querschnitt etwa U-förmigen Führungsgehäuse 1, welches als Aluminiumprofilträger ausgebildet sein kann. In diesem sind zwei parallele Führungsschienen 2 befestigt, an welchen sich jeweils mindestens ein Führungswagen 3 über Kugelumläufe 4 abstützt. Mit Hilfe der tragenden Kugeln dieser Kugelumläufe 4 sind die Führungswagen 3 längs der Führungsschiene 2 verfahrbar.

Die Führungswagen 3 dienen hier zur fahrbaren Lagerung eines Laufwagens 5. Dieser ist an den Oberseiten der Führungswagen 3, die von den Führungsschienen 2 abgewandt sind, mit Schrauben 6 befestigt. Der Laufwagen 5 befindet sich an der Außenseite des Führungsgehäuses 1 und ragt durch zwei seitliche Längsöffnungen 7 und eine mittlere Längsöffnung 8 in das Führungsgehäuse 1 hinein, um mit den Führungswagen 3 verbunden werden zu können und um in einem mittleren Aufnahmeraum 9 des Führungsgehäuses 1 mit einem Motorprimärteil 10 eines Antriebs verbunden werden zu können. Dem Motorprimärteil 10 an dem Laufwagen 5 liegt ein Motorsekundärteil 11 gegenüber, das in dem Führungsgehäuse 1 befestigt ist. Diese beiden Teile bilden einen elektrischen Antriebsmotor für die Verschiebung des Laufwagens 5 in Längsrichtung des Führungsgehäuses 1. Mit einem solchen, das Motorprimärteil 10 und das Motorsekundärteil 11 enthaltenden Antrieb ist die Linearführung als Linearmotor ausgebildet.

Die seitlichen Längsöffnungen 7 sind außerhalb des Laufwagens 5 jeweils mit einem Abdeckband 12 verschlossen, während für die mittlere Längsöffnung 8 ein Abdeckband 13 vorgesehen ist. Die Abdeckbänder 12 und 13 sind an dem Führungsgehäuse 1 in Längsrichtung der Führungsschiene 2 fest angeordnet. Sie sind durch schlitzförmige Öffnungen des Laufwagens 5 hindurchgeführt, so daß dieser während seiner Verschiebung in Längsrichtung des Führungsgehäuses 1 eine Relativbewegung zu den Abdeckbändem 12 und 13 ausführt. Mit Hilfe von Permanentmagnetstreifen 14, die in Längsnuten des Führungsgehäuses 1 angeordnet sind, werden die Abdeckbänder 12 und 13 außerhalb des Laufwagens 5 an dem Führungsgehäuse 1 gehalten. Die Linearführung gemäß Figur 4 ist zu einer senkrechten Mittelebene 15 symmetrisch ausgeführt. Sie ist mit einem Meßstreifen 16 für die Längenmessung versehen, welcher sich im Profilinneren des Führungsgehäuses 1 befindet, parallel zu den Führungsschienen 2 verläuft und einem der Führungswagen 3 benachbart ist. Der Meßstreifen 16 ist ein Teil eines Längenmeßsystems.

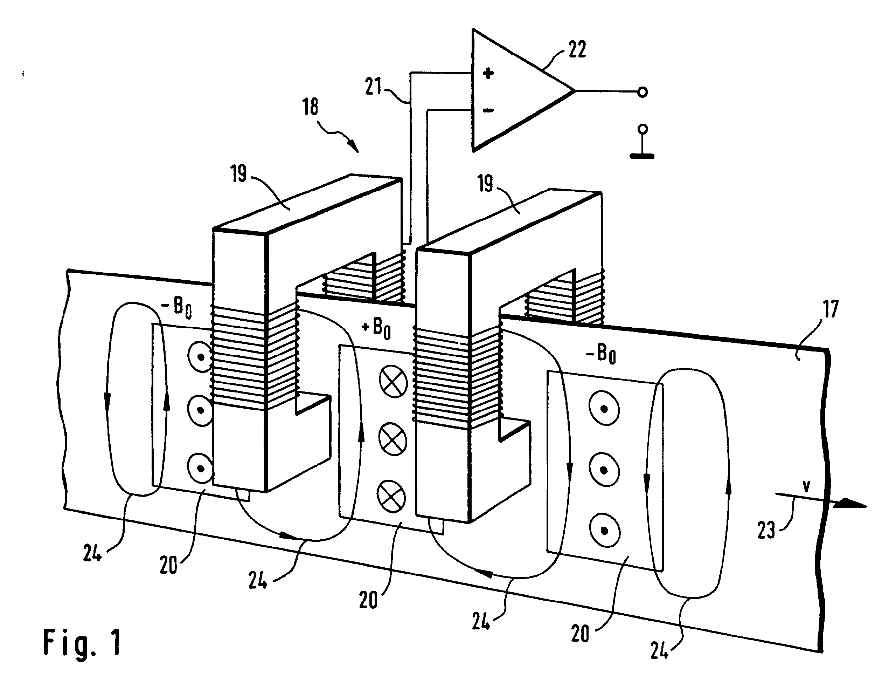

Anhand von Figur 1 wird das Prinzip, nach welchem ein erfindungsgemäß verwendeter Beschleunigungssensor arbeitet, wie folgt erläutert: Ein streifenförmiges Wirbelstromblech 17, welches aus einem nicht magnetisierbaren Metall besteht, wird von einem Erregerblock 18 teilweise umgeben, der von zwei etwa U-förmigen Meßaufnehmern 19 gebildet ist. Die beiden Meßaufnehmer 19 sind in Längsrichtung des Wirbelstromblechs 17 hintereinander angeordnet. In dem Erregerblock 18 befinden sich außerdem Permanentmagnete. Die U-Schenkel der Meßaufnehmer 19 sind jeweils von Spulen elektrischer Leiterdrähte 21 umgeben, die zu einem Verstärker 22 führen. Wenn nun das Wirbelstromblech 17 in seiner durch den Pfeil 23 gekennzeichneten Längsrichtung mit einer Geschwindigkeit v an den Meßaufnehmern 19 entlang bewegt wird, induzieren die Permanentmagnete infolge ihrer Permanentmagnetfelder 20 in dem Wirbelstromblech 17 elektrische Spannungen, welche dort Wirbelströme 24 hervorrufen. Diese erzeugen wiederum an den Spulen der Meßaufnehmer 19 eine von der Änderung der Geschwindigkeit des Wirbelstromblechs 17 in der Zeiteinheit (dv/dt), also von der Beschleunigung abhängige elektrische Spannung, welche durch den Verstärker 22 erhöht und für Regelungszwecke verwendet wird.

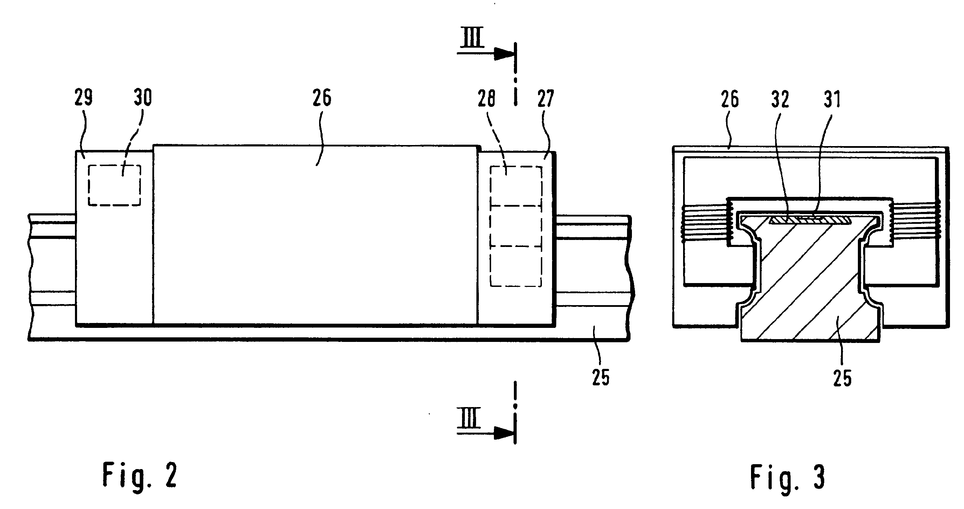

Eine in den Figuren 2 und 3 dargestellte erfindungsgemäße Linearführung enthält eine aus amagnetischem, härtbaren Wälzlagerstahl bestehende Führungsschiene 25, die von einem Führungswagen 26 teilweise umgeben ist. An dem Führungswagen 26 ist an einer Stirnseite, die in Längsrichtung der Führungsschiene 25 weist, ein Gehäuse 27 angeordnet. Dieses ist für einen Erregerblock 28 eines Beschleunigungssensors vorgesehen. An der anderen Stirnseite des Führungswagens 26 befindet sich ein Gehäuse 29 für einen Meßkopf 30 eines Längenmeßsystems. Ein Meßstreifen 31 des Längenmeßsystems ist an der Führungsschiene 25 dadurch befestigt, daß er von einem Abdeckband 32 getragen wird. Dieses ist in einer Längsnut der Führungsschiene 25 eingesetzt. Die Längsnut befindet sich an der dem Meßkopf 30 zugewandten Oberseite der Führungsschiene 25.

Es ist auch möglich, dass eine rotierende Scheibe als Wirbelstromblech fungiert und von der Führungsschiene durch Reibschluß angetrieben wird. Auf diese Weise wird solch ein rotativer Ferraris-Sensor für eine Linearführung nutzbar gemacht.

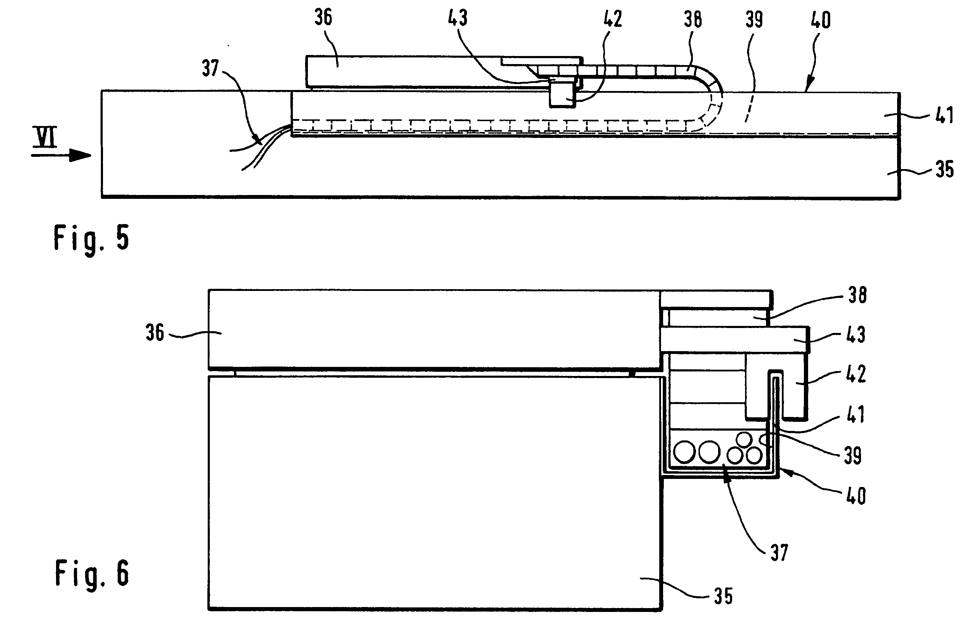

Die Figuren 5 und 6 zeigen eine erfindungsgemäße Linearführung, die auch als Modul bezeichnet wird. Sie enthält ein sich in Längsrichtung erstreckendes Führungsgehäuse 35, aus welchem an der Oberseite ein Laufwagen 36 herausragt. Dieser ist an Führungsschienen abgestützt und wird auch als beweglicher Schlitten bezeichnet. Die Führungsschienen sind innerhalb des Führungsgehäuses 35 parallel zu diesem angeordnet.

Diese als Modul bezeichnete Linearführung wird mit einem Linearmotor angetrieben, welcher sich ebenfalls in dem Führungsgehäuse 35 befindet. Von außen erkennt man bei diesem Modul lediglich den beweglichen Schlitten oder Laufwagen 36 und das Führungsgehäuse 35. Da sich bei Verwendung eines Linearmotors in dem beweglichen Schlitten elektrische Antriebskomponenten wie z. B. ein stromführendes Primärteil des Motors und ein lineares Meßsystem befinden, müssen Kabel aus dem Schlitten herausgeführt werden können. Dieses geschieht in üblicher Weise mit einer Schleppkette für Kabel.

Im Ausführungsbeispiel ist für die zu dem Laufwagen 36 führenden Kabel 37 eine Schleppkette 38 in einem Kabelkanal 39 angeordnet. Der Kabelkanal 39 wird von einem im Querschnitt U-förmigen Profilträger 40 gebildet, welcher an einer Längsseite des Führungsgehäuses 35 befestigt ist.

Erfindungsgemäß wird nun ein U-Schenkel des Profilträgers 40 als Wirbelstromblech 41 für einen Ferraris-Sensor benutzt. Daher besteht der Profilträger aus einem elektrisch leitenden nicht magnetisierbaren Material, wie z. B. Aluminium oder Kupfer. Zu dem Ferraris-Sensor gehört außerdem ein Erregerblock 42. Dieser ist im Querschnitt U-förmig ausgebildet und umfaßt das Wirbelstromblech 41 teilweise.

Während der Profilträger 40 und mit ihm das Wirbelstromblech 41 an dem Führungsgehäuse 35 befestigt sind, wird der Erregerblock 42 von einer Mitnehmerleiste 43 gehalten, die an der dem Profilträger 40 benachbarten Längsseite des Laufwagens 36 befestigt ist. Diese Anordnung ermöglicht es, daß der Erregerblock 42 sich an dem Wirbelstromblech 41 entlang bewegt, wenn der Schlitten oder Laufwagen 36 längs des Führungsgehäuses 35 relativ zu diesem angetrieben wird.

### Bezugszahlenliste

| | | | |
|---|---|---|---|
| 1 | Führungsgehäuse | 28 | Erregerblock |
| 2 | Führungsschiene | 29 | Gehäuse für den Meßkopf |
| 3 | Führungswagen | 30 | Meßkopf |
| 4 | Kugelumlauf | 31 | Meßstreifen |
| 5 | Laufwagen | 32 | Abdeckband |
| 6 | Schraube | 35 | Führungsgehäuse |
| 7 | seitliche Längsöffnung | 36 | Laufwagen |
| 8 | mittlere Längsöffnung | 37 | Kabel |
| 9 | mittlerer Aufnahmeraum | 38 | Schleppkette |
| 10 | Motorprimärteil | 39 | Kabelkanal |
| 11 | Motorsekundärteil | 40 | Profilträger |
| 12 | Abdeckband | 41 | Wirbelstromblech |
| 13 | Abdeckband | 42 | Erregerblock |
| 14 | Permanentmagnetstreifen | 43 | Mitnehmerleiste |
| 15 | Mittelebene | v | Geschwindigkeit |
| 16 | Längenmeßstreifen | | |
| 17 | Wirbelstromblech | | |
| 18 | Erregerblock | | |
| 19 | Meßaufnehmer | | |
| 20 | Permanentmagnetfeld | | |
| 21 | elektrischer Leiterdraht | | |
| 22 | Verstärker | | |
| 23 | Pfeil | | |
| 24 | Wirbelstrom | | |
| 25 | Führungsschiene | | |
| 26 | Führungswagen | | |
| 27 | Gehäuse für den Erreger- | | |
| | block | | |

## Patentansprüche

1. Linearführung mit einer Führungsschiene (25), an welcher ein Lauf- oder Führungswagen (26) längsverschieblich abgestützt ist, und mit einem die Längsverschiebung des Wagens (26, 36) bewirkenden Antrieb, welcher als Elektromotor mit einem an der Führungsschiene (25) angeordneten Motorteil und einem an dem Wagen (26, 36) angeordneten Motorteil ausgebildet ist, sowie mit einem der Linearführung zugeordneten Längenmesssystem, welches einen dem Wagen (26, 36) oder der Führungsschiene (25) benachbarten, parallel zur Führungsschiene (25) verlaufenden Messstreifen (31) und einen relativ zu diesem verschiebbaren Messkopf (30) aufweist, **dadurch gekennzeichnet, dass** dem Längenmesssystem ein mit einem Wirbelstromblech und einem dieses umfassenden, U-förmig ausgebildeten Erregerblock (28, 42) nach dem Ferraris-Prinzip arbeitender Beschleunigungssensor zugeordnet ist, wobei das Wirbelstrombtech aus einem elektrisch leitenden, nicht magnetisierbaren Material wie z. B. Aluminium oder Kupfer besteht und der Erregerblock (28, 42) Permanentmagnete enthält und an dem Lauf- oder Führungswagen (26, 36) befestigt ist.

2. Linearführung nach Anspruch 1, **dadurch gekennzeichnet, dass** die Führungsschiene (25) in einem Führungsgehäuse (35) angeordnet ist.

3. Linearführung nach Anspruch 1, **dadurch gekennzeichnet, dass** die Funktion des Wirbelstromblechs von der Führungsschiene (25) übernommen und diese aus einem amagnetischen härtbaren Wälzlagerstahl hergestellt ist.

4. Linearführung nach Anspruch 1, **dadurch gekennzeichnet, dass** als Wirbelstromblech ein Abdeckband (32) aus einem nicht magnetischen Metallwerkstoff verwendet ist, welches in einer Längsnut der Führungsschiene (25) eingesetzt ist.

5. Linearführung nach Anspruch 1, **dadurch gekennzeichnet, dass** der Erregerblock (28) in einem separaten Gehäuse (27) angeordnet ist, welches an dem Führungswagen (26) befestigt ist.

6. Linearführung nach Anspruch 5, **dadurch gekennzeichnet, dass** das Gehäuse (27) für den Erregerblock (28) an einer in die Verschieberichtung weisenden Stirnseite des Führungswagens (26) angeordnet ist.

7. Linearführung nach Anspruch 1, **dadurch gekennzeichnet, dass** der Messkopf (30) des Längenmesssystems in einem Gehäuse (29) angeordnet ist, welches an dem Führungswagen (26) an einer in die Verschieberichtung weisenden Stirnseite befestigt ist.

8. Linearführung nach Anspruch 1, **dadurch gekennzeichnet, dass** die Funktion des Wirbelstromblechs von einer rotierenden Scheibe übernommen ist, welche von der Führungsschiene antreibbar ist.

9. Linearführung nach Anspruch 1, **dadurch gekennzeichnet, dass** das Wirbelstromblech (41) Teil eines einen Kabelkanal (39) für eine Schleppkette (38) bildenden, im Querschnitt U-förmigen Profilträgers (40) ist, welcher an einer Längsseite des Führungsgehäuses (35) befestigt ist.

10. Linearführung nach Anspruch **1, dadurch gekennzeichnet, dass** der Erregerblock (42) von einer Mitnehmerleiste (43) gehalten ist, welche an einer Längsseite des Laufwagens (36) befestigt ist.

## Claims

1. Linear guide, with a guide rail (25) on which a running or guide carriage (26) is supported longitudinally displaceably, and with a drive which causes the longitudinal displacement of the carriage (26, 36) and which is designed as an electric motor with a motor part arranged on the guide rail (25) and with a motor part arranged on the carriage (26, 36), and also with a length measurement system which is assigned to the linear guide and which has a measurement strip (31), adjacent to the carriage (26, 36) or to the guide rail (25) and running parallel to the guide rail (25), and a measurement head (30) displaceable in relation to the said measurement strip, **characterized in that** the length measurement system is assigned an acceleration sensor which operates on the Ferraris principle with an eddy-current plate and with an exciter block (28, 42) of U-shaped design surrounding the latter, the eddy-current plate consisting of an electrically conductive, non-magnetizable material, such as, for example, aluminium or copper, and the exciter block (28, 42) containing permanent magnets and being fastened to the running or guide carriage (26, 36).

2. Linear guide according to Claim 1, **characterized in that** the guide rail (25) is arranged in a guide housing (35).

3. Linear guide according to Claim 1, **characterized in that** the function of the eddy-current plate is assumed by the guide rail (25), and the latter is produced from a non-magnetic hardenable rolling-bearing steel.

4. Linear guide according to Claim 1, **characterized in that** the eddy-current plate used is a cover band (32) which consists of a non-magnetic metal material and which is inserted in a longitudinal groove of the guide rail (25).

5. Linear guide according to Claim 1, **characterized in that** the exciter block (28) is arranged in a separate housing (27) which is fastened to the guide carriage (26).

6. Linear guide according to Claim 5, **characterized in that** the housing (27) for the exciter block (28) is arranged on an end face of the guide carriage (26), the said end face pointing in the displacement direction.

7. Linear guide according to Claim 1, **characterized in that** the measurement head (30) of the length measurement system is arranged in a housing (29) which is fastened to the guide carriage (26) on an end face pointing in the displacement direction.

8. Linear guide according to Claim 1, **characterized in that** the function of the eddy-current plate is assumed by a rotating disc which can be driven by the guide rail.

9. Linear guide according to Claim 1, **characterized in that** the eddy-current plate (41) is part of a profile carrier (40) of U-shaped cross section which forms a cable duct (39) for a drag chain (38) and which is fastened to a longitudinal side of the guide housing (35).

10. Linear guide according to Claim 1, **characterized in that** the exciter block (42) is held by a driver batten (43) which is fastened to a longitudinal side of the running carriage (36).

## Revendications

1. Guidage linéaire comprenant un rail de guidage (25), sur lequel est supporté, de manière déplaçable en longueur, un chariot de roulement ou de guidage (26), et comprenant un entraînement provoquant le déplacement en longueur du chariot (26, 36), lequel est réalisé sous forme de moteur électrique avec une partie de moteur disposée sur le rail de guidage (25) et une partie de moteur disposée sur le chariot (26, 36), et comprenant également un système de mesure de longueur associé au guidage linéaire, qui présente une bande de mesure (31) adjacente au chariot (26, 36) ou au rail de guidage (25), s'étendant parallèlement au rail de guidage (25), et une tête de mesure (30) déplaçable par rapport à celle-ci, **caractérisé en ce que** l'on associe au système de mesure de longueur un capteur d'accélération fonctionnant selon le principe de Ferrari avec une tôle de tourbillonnement et un bloc excitateur (28, 42) en forme de U, entourant ladite tôle, la tôle de tourbillonnement se composant d'un matériau électriquement conducteur, non magnétisable, comme par exemple de l'aluminium ou du cuivre, et le bloc excitateur (28, 42) comprenant des aimants permanents et étant fixé sur le chariot de roulement ou de guidage (26, 36).

2. Guidage linéaire selon la revendication 1, **caractérisé en ce que** le rail de guidage (25) est disposé dans un boîtier de guidage (35).

3. Guidage linéaire selon la revendication 1, **caractérisé en ce que** la fonction de la tôle de tourbillonnement est reprise par le rail de guidage (25) et celui-ci est fabriqué en un acier pour paliers à roulements non magnétique durcissable.

4. Guidage linéaire selon la revendication 1, **caractérisé en ce que** l'on utilise comme tôle de tourbillonnement une bande de recouvrement (32) en un matériau métallique non magnétique, qui est inséré dans une rainure longitudinale du rail de guidage (25).

5. Guidage linéaire selon la revendication 1, **caractérisé en ce que** le bloc excitateur (28) est disposé dans un boîtier séparé (27), qui est fixé sur le chariot de guidage (26).

6. Guidage linéaire selon la revendication 5, **caractérisé en ce que** le boîtier (27) pour le bloc excitateur (28) est disposé sur un côté frontal du chariot de guidage (26) tourné dans la direction de déplacement.

7. Guidage linéaire selon la revendication 1, **caractérisé en ce que** la tête de mesure (30) du système de mesure de longueur est disposée dans un boîtier (29) qui est fixé sur le chariot de guidage (26) au niveau d'un côté frontal tourné dans la direction de déplacement.

8. Guidage linéaire selon la revendication 1, **caractérisé en ce que** la fonction de la tôle de tourbillonnement est reprise par un disque rotatif qui peut être entraîné par le rail de guidage.

9. Guidage linéaire selon la revendication 1, **caractérisé en ce que** la tôle de tourbillonnement (41) fait partie d'un support profilé (40) de section transversale en forme de U, formant un canal de câble (39) pour une chaîne d'entraînement (38), le support profilé (40) étant fixé sur un côté longitudinal du boîtier de guidage (35).

10. Guidage linéaire selon la revendication 1, **caractérisé en ce que** le bloc excitateur (42) est maintenu par une baguette d'entraînement (43) qui est fixée sur un côté longitudinal du chariot de roulement (36).
